# EUROPÄISCHE PATENTSCHRIFT

(11) **EP 3 083 344 B1**
(45) Veröffentlichungstag und Bekanntmachung des Hinweises auf die Patenterteilung: **04.04.2018**
(21) Anmeldenummer: 14823894.2
(22) Anmeldetag: 24.11.2014
(51) Int. Cl.: B60S 1/38, B60S 1/40

(54) **VERBINDUNGSANORDNUNG ZUM VERBINDEN EINES WISCHBLATTS MIT EINEM WISCHARM, WISCHBLATT UND WISCHARM**
CONNECTING ARRANGEMENT FOR CONNECTING A WIPER BLADE TO A WIPER ARM, WIPER BLADE, AND WIPER ARM
DISPOSITIF DE RACCORDEMENT POUR RACCORDER UNE RACLETTE D'ESSUIE-GLACE À UN BRAS D'ESSUIE-GLACE, RACLETTE D'ESSUIE-GLACE ET BRAS D'ESSUIE-GLACE

(30) Priorität: 27.11.2013 DE 102013019805
(43) Veröffentlichungstag der Anmeldung: 26.10.2016
(73) Patentinhaber: Daimler AG, 70327 Stuttgart (DE)
(72) Erfinder: SCHMID, Heiko, 71739 Oberriexingen (DE); SCHUMACHER, Eric, 55411 Bingen (DE)
(74) Vertreter: JENSEN & SON
(86) Internationale Anmeldenummer: PCT/EP2014/003123
(87) Internationale Veröffentlichungsnummer: WO 2015/078569

(56) Entgegenhaltungen:
- DE-A1-102010 052 315
- DE-A1-102011 057 118
- DE-A1-102011 118 220
- DE-A1-102012 021 472

## Beschreibung

Die Erfindung betrifft eine Verbindungsanordnung zum Verbinden eines Wischblatts mit einem Wischarm für eine Scheibenwischanlage eines Fahrzeugs. Ein Anbindungselement umfasst ein zum Festlegen des Anbindungselements an dem Wischarm ausgebildetes Oberteil. An dem Oberteil ist ein Unterteil des Anbindungselements um eine Drehachse schwenkbar gelagert. Das Unterteil ist zum Halten eines Grundkörpers des Wischblatts ausgebildet. Ein den Wischarm in einem Endbereich umgreifender Schieber ist entlang des Wischarms aus einer Montagestellung in eine das Anbindungselement sichernde Funktionsstellung verschiebbar. Des Weiteren betrifft die Erfindung ein Wischblatt und einen Wischarm für eine solche Verbindungsanordnung.

Eine Verbindungsanordnung der eingangs genannten Art ist in der DE 10 2010 052 315 A1 beschrieben. Hierbei kann bei in die Montagestellung verschobenem Schieber das Anbindungselement in eine Richtung aus dem als Aufnahme ausgebildeten Endbereich des Wischarms entnommen werden, welche senkrecht zu einer Längserstreckungsrichtung des Wischblatts beziehungsweise des Wischarms verläuft. Beim Austausch des Wischblatts wird entsprechend nach dem Verschieben des Schiebers in die Montagestellung das Anbindungselement von unten in die Aufnahme eingeführt. Anschließend wird der Schieber hin zu einem Ende des Wischarms verschoben, an welchem der Wischarm mit einer Antriebswelle eines Wischermotors verbunden ist.

Es kann jedoch vorkommen, dass sich der Schieber ungewollt in die Montagestellung verschiebt, etwa durch eine äußere, unbeabsichtigte Krafteinwirkung auf den Schieber.

Aufgabe der vorliegenden Erfindung ist es daher, eine Verbindungsanordnung, ein Wischblatt und einen Wischarm der eingangs genannten Art zu schaffen, bei welcher beziehungsweise bei welchem eine verbesserte Fixierung des Wischblatts am Wischarm sichergestellt werden kann.

Diese Aufgabe wird durch eine Verbindungsanordnung mit den Merkmalen des Patentanspruchs 1, ein Wischblatt mit den Merkmalen des Patentanspruchs 8 und einen Wischarm mit den Merkmalen des Patentanspruchs 9 gelöst. Vorteilhafte Ausgestaltungen mit zweckmäßigen Weiterbildungen der Erfindung sind in den abhängigen Patentansprüchen angegeben.

Die erfindungsgemäße Verbindungsanordnung umfasst wenigstens ein Sicherungselement, welches bei einer Schwenkbewegung des Unterteils um die Drehachse um einen ersten Betrag ein Verschieben des Schiebers in die Montagestellung unterbindet. Jedoch lässt das Sicherungselement das Verschieben des Schiebers in die Montagestellung bei einer Schwenkbewegung des Unterteils um die Drehachse um einen zweiten Betrag zu, welcher größer ist als der erste Betrag. Ein solches Sicherungselement vermeidet ein unbeabsichtigtes Sich-Lösen des Schiebers, also das Verschieben desselben in die Montagestellung, solange das Unterteil nicht um mehr als den ersten Betrag um die Drehachse geschwenkt wird. Soll hingegen das Wischblatt gewechselt werden, so braucht lediglich das Unterteil um den zweiten Betrag um die Drehachse verschwenkt zu werden, und der Schieber lässt sich einfach aus der Funktionsstellung in die Montagestellung verschieben, welche einer Demontagestellung gleich ist.

Dies ermöglicht es, die zum Verschieben des Schiebers in die Montagestellung und zurück in die Funktionsstellung aufzubringenden Kräfte so auszulegen, dass eine Bedienperson sie leicht und ohne Hilfsmittel wie etwa Werkzeuge aufbringen kann. Dennoch ist das Wischblatt über den Schieber sicher am Wischarm gehalten. So ist eine verbesserte Fixierung des Wischblatts am Wischarm sichergestellt.

Zudem sind Schwenkbewegungen des Unterteils relativ zu dem Oberteil um den ersten Betrag möglich, so dass im Wischbetrieb stets ein gutes Wischergebnis erreicht wird. Das Sicherungselement erlaubt es zudem sicherzustellen, dass das Anbindungselement nicht fehlerhaft in den Endbereich des Wischarms eingebracht wird. Es dient somit als Verdrehsicherung. Des Weiteren ist es ausreichend, die zum Verschieben des Schiebers aufzubringenden Betätigungskräfte sehr gering und somit komfortabel auszulegen, da lediglich ein Gehaltenwerden des Schiebers selber in der Montagestellung sichergestellt zu werden braucht.

Bevorzugt ist das wenigstens eine Sicherungselement derart ausgebildet, dass die Schwenkbewegung des Unterteils um die Drehachse um den ersten Betrag im Wischbetrieb auftritt. Dann ist sichergestellt, dass im Wischbetrieb das Sicherungselement ein ungewolltes Öffnen des Schiebers, also dessen Verschieben in die Montagestellung, sicher unterbindet. Bei einem Verschwenken des Unterteils um die Drehachse über die im Wischbetrieb auftretenden Beträge hinaus kann jedoch sehr leicht dafür gesorgt werden, dass sich der Schieber in die Montagestellung verschieben lässt, in welcher das Anbindungselement aus dem Endbereich des Wischarms entnehmbar ist. Im Wischbetrieb treten jedoch derartig große Schwenkbewegungen regelmäßig nicht auf. Vielmehr es ist ein weiteres Verdrehen des Unterteils um die Drehachse notwendig, um den Schieber in seine Demontagestellung oder Montagestellung zu bewegen.

In einer weiteren vorteilhaften Ausgestaltung ist in der Funktionsstellung das Anbindungselement in eine Längsrichtung des Wischblatts lagegesichert zwischen dem wenigstens einen Sicherungselement und einem stirnseitigen Ende des Schiebers gehalten. So ist sichergestellt, dass im Wischbetrieb das Wischblatt sicher auf der Scheibe geführt ist. Zugleich ist eine Bewegung des Anbindungselements in die Längsrichtung des Wischblatts besonders sicher unterbunden, und so für eine besonders gute Fixierung des Wischblatts am Wischarm gesorgt.

Das wenigstens eine Sicherungselement kann als an dem Schieber angeordneter Vorsprung ausgebildet sein, welcher bei der Schwenkbewegung des Unterteils um die Drehachse um den ersten Betrag mit einem auf Seiten des Unterteils vorgesehenen Anschlag in Anlage ist. Dann braucht nicht das Anbindungselement modifiziert zu werden, um ein ungewolltes Sich-Lösen des Schiebers zu unterbinden.

Zusätzlich oder alternativ kann das wenigstens eine Sicherungselement einen auf Seiten des Unterteils vorgesehenen Vorsprung umfassen, welcher bei der Schwenkbewegung des Unterteils um die Drehachse um den ersten Betrag mit einem auf Seiten des Schiebers vorgesehenen Anschlag in Anlage ist. Dadurch ist sichergestellt, dass bei einem Tausch des Wischblatts auch das Sicherungselement getauscht wird. Bei einem Verschleiß und einer damit einhergehenden Funktionseinbuße des Sicherungselements kann somit leicht für Abhilfe gesorgt werden.

Das Sicherungselement kann hier insbesondere als an dem Wischblatt angeordnetes Zusatzteil ausgebildet sein, welches mit dem Unterteil in Anlage ist. So kann auch ein bestehendes Wischblatt besonders einfach nachgerüstet werden, da lediglich an dem Wischblatt zusätzlich das Sicherungselement angebracht zu werden braucht.

Alternativ kann der Vorsprung einstückig mit einem Grundkörper des Unterteils ausgebildet sein. So lässt sich ein besonders kompaktes und funktionssicheres Anbindungselement bereitstellen.

Bei dem erfindungsgemäßen Wischblatt ist das wenigstens eine Sicherungselement am Unterteil des Anbindungselements angeordnet. Jedoch kann auch bei dem erfindungsgemäßen Wischarm das wenigstens eine Sicherungselement am Schieber angeordnet sein.

Die für die erfindungsgemäße Verbindungsanordnung beschriebenen Vorteile und bevorzugten Ausführungsformen gelten auch für das erfindungsgemäße Wischblatt und den erfindungsgemäßen Wischarm.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Verbindungsanordnung, wobei an einem ausschnittsweise und teilweise geschnitten dargestellten Wischarm für eine Scheibenwischanlage eines Fahrzeugs ein Wischblatt gehalten ist, und wobei ein Schieberiegel in eine Funktionsstellung verschoben ist, in welcher er einen Adapter des Wischblatts gegen ein Sich-Lösen vom Wischarm sichert;
- Fig. 2: perspektivisch ein als Reiter ausgebildetes Unterteil des Adapters gemäß Fig. 1;
- Fig. 3: ein Verschwenken des Unterteils relativ zu einem Oberteil des Adapters in eine Position, in welcher der Schieberiegel in seine Demontagestellung verschiebbar ist, in welcher das Wischblatt vom Wischarm demontiert werden kann;
- Fig. 4: das Verschieben des Schieberiegels in die Demontagestellung bei der Verbindungsanordnung gemäß Fig. 1;
- Fig. 5: perspektivisch eine Wischarmanordnung, bei welcher ein die Bewegung des Schieberiegels in die Demontagestellung verhinderndes Sicherungselement als von dem Unterteil des Adapters separates Bauteil ausgebildet ist;
- Fig. 6: das von dem Wischarm demontierte Wischblatt gemäß Fig. 5 in einer Perspektivansicht;
- Fig. 7: das Verschwenken des Unterteils des Adapters gemäß Fig. 5 in eine Position, in welcher der Schieberiegel in seine Demontagestellung verschiebbar ist;
- Fig. 8: das Verschieben des Schieberiegels in die Demontagestellung bei der Verbindungsanordnung gemäß Fig. 5;
- Fig. 9: in einer schematischen Seitenansicht ein mit dem Unterteil einstückig ausgebildetes Sicherungselement, welches den Schieberiegel sichert;
- Fig. 10: in einer Perspektivansicht und ausschnittsweise eine Verbindungsanordnung, bei welcher ein an dem Unterteil vorgesehener Vorsprung den Schieberiegel arretiert;
- Fig. 11: bei der Verbindungsanordnung gemäß Fig. 10 das Verschwenken des Unterteils relativ zu dem Oberteil in eine Schwenkstellung, in welcher der Schieberiegel nicht mehr gesichert ist;
- Fig. 12: bei der Verbindungsanordnung gemäß Fig. 10 das Demontieren des Wischblatts vom Wischarm; und
- Fig. 13: eine Variante der Verbindungsanordnung, bei welcher ein als Sicherungselement dienender Vorsprung am Schieberiegel angeordnet ist.

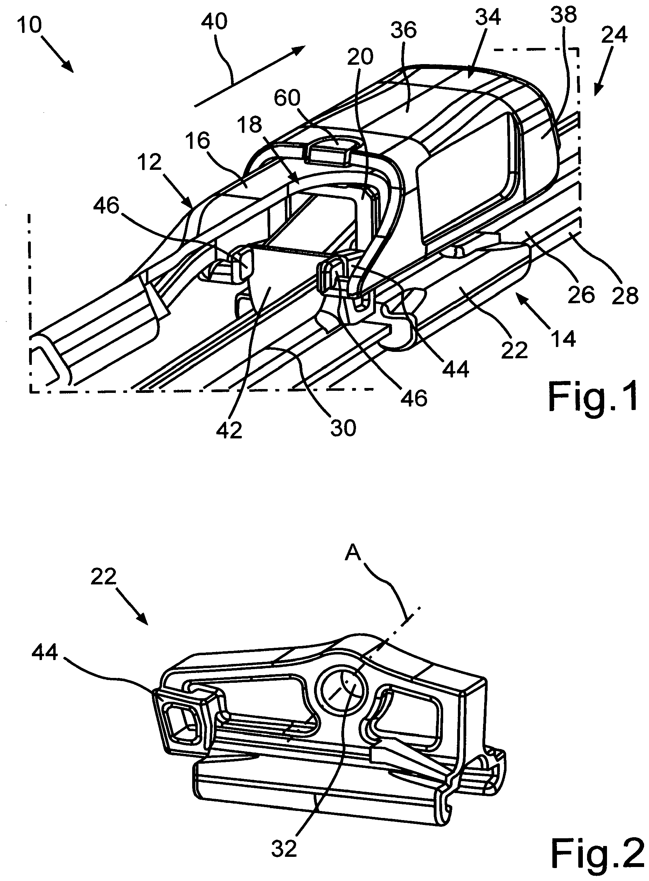

Von einer Verbindungsanordnung 10 sind in Fig. 1 ein Wischarm 12 und ein Wischblatt 14 einer Scheibenwischanlage eines Fahrzeugs ausschnittsweise gezeigt. In einem teilweise geschnitten dargestellten Endbereich 16 des Wischarms 12 ist ein als Anbindungselement dienender Adapter 18 gehalten. Der Adapter 18 umfasst ein als Wippe 20 ausgebildetes Oberteil und ein als Reiter 22 ausgebildetes Unterteil. Hierbei dient der Reiter 22 dem Halten eines Grundkörpers 24 des Wischblatts 14. Der Grundkörper 24 umfasst vorliegend zwei Federschienen 26, welche von Greifelementen des Reiters 22 umgriffen werden, und eine Wischlippe 28 des Wischblatts 14. Zudem kann das Wischblatt 14 einen Spoiler 30 aufweisen.

Der Reiter 22 ist relativ zu der Wippe 20 um eine Drehachse A verschwenkbar, welche in Fig. 2 dargestellt ist. Diese Drehachse A ist durch einen Stift bereitgestellt, welcher durch eine in dem Reiter 22 vorgesehene Durchtrittsöffnung 32 hindurchgeführt ist. Enden dieses Stifts sind in Öffnungen aufgenommen, welche in Schenkeln der im Querschnitt ein U-Profil aufweisenden Wippe 20 angeordnet sind. Diese Schenkel und ein Rücken der Wippe 20 liegen an Schenkeln und einem Rücken des im Querschnitt ebenfalls ein U-Profil aufweisenden Endbereichs 16 des Wischarms 12 an.

Gegen ein Sich-Lösen des Adapters 18 vom Wischarm 12 ist der Adapter 18 vorliegend mittels eines Schiebers in Form eines Schieberiegels 34 gesichert, welcher ebenfalls im Querschnitt ein U-Profil mit einem Rücken 36 und seitlichen Schenkeln 38 aufweist. Von den Schenkeln 38 des Schieberiegels 34 springen Stege oder Leisten nach innen vor, welche die Schenkel des Wischarms 12 in dessen Endbereich 16 unterseitig umgreifen.

Um den Adapter 18 und mit diesem das Wischblatt 14 vom Wischarm 12 zu lösen, wird der Schieberiegel 34 in eine Richtung verschoben, welche in Fig. 1 durch einen Pfeil 40 veranschaulicht ist. Der Schieberiegel 34 wird also in eine Montagestellung oder Demontagestellung verschoben, in welcher er über ein freies Ende des Wischarms 12 übersteht.

Vorliegend ist verhindert, dass sich der Schieberiegel 34 ungewollt in die durch den Pfeil 40 angegebene Richtung bewegt. Hierfür ist bei der in Fig. 1 gezeigten Verbindungsanordnung 10 als Sicherungselement 42 ein Vorsprung vorgesehen, welcher einstückig mit dem Reiter 22 ausgebildet ist. Seitliche Endbereiche 44 dieses Sicherungselements 42 sind mit an den Schenkeln 38 des Schieberiegels 34 vorgesehenen Anschlägen 46 in Anlage. Dies ist der Fall, solange der Reiter 22 und somit der Grundkörper 24 des Wischblatts 14 relativ zu dem als die Wippe 20 ausgebildeten Oberteil um die Drehachse A lediglich so weit verschwenkt wird, wie dies im Wischbetrieb vorkommt.

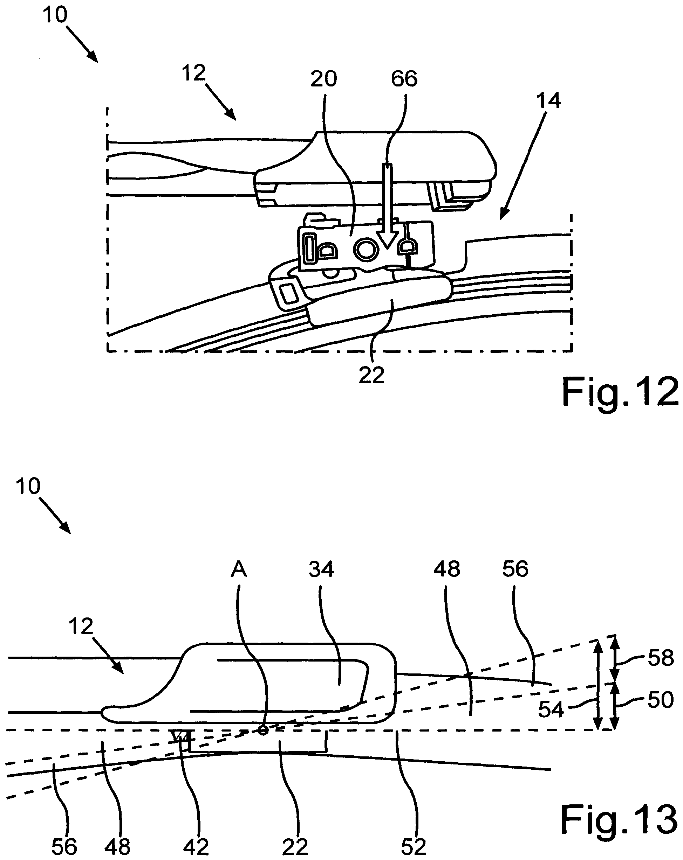

Ein entsprechender Arbeitsbereich 48, in welchem im Wischbetrieb Schwenkbewegungen des Reiters 22 um die Schwenkachse A vorkommen, ist in Fig. 13 veranschaulicht. Durch das Verschwenken des Reiters 22 - und zusammen mit diesem des Grundkörpers 24 des Wischblatts 14 - in dem Arbeitsbereich 48 wird sichergestellt, dass im Wischbetrieb die Wischlippe 28 stets auf der Scheibe des Fahrzeugs aufliegt. Ein erster Betrag 50, um welchen der Reiter 22 bezogen auf eine Horizontale 52 im Wischbetrieb verschwenkt wird, also ein mit dem Arbeitsbereich 48 korrespondierender Betrag 50 ist in Fig. 13 ebenfalls veranschaulicht. Der Betrag 50 kann als Winkel bezogen auf die Horizontale 52 angegeben werden.

Wenn jedoch das Wischblatt 14 vom Wischarm 12 gelöst werden soll, so lässt sich der Reiter 22 und mit diesem der Grundkörper 24 des Wischblatts 14 weiter um die Drehachse A verschwenken als es bei im Wischbetrieb auftretenden Bewegungen, also im Arbeitsbereich 48 der Fall ist. Im Arbeitsbereich 48 bewegt sich der Reiter 22 also, so lange die Wischlippe 28 auf der Scheibe des Fahrzeugs aufliegt. Bei Bewegungen des Reiters 22 in diesem Arbeitsbereich 48 sorgt das Sicherungselement 42 dafür, dass der Schieberiegel 34 nicht in seine Demontagestellung verschoben werden kann. Dann sind nämlich die Anschläge 46 mit dem Sicherungselement 42 in Anlage. Auf diese Weise ist eine formschlüssige Sicherung des Schieberiegels 34 sichergestellt.

Demgegenüber lässt sich bei von der Scheibe weg geklapptem Wischarm 12 der Grundkörper 24 des Wischblatts 14 und somit der Reiter 22 um einen zweiten Betrag 54 verschwenken, welcher größer ist als der erste Betrag 50 (vergleiche Fig. 13). Auch der zweite Betrag 54 kann als Winkel bezogen auf die Horizontale 52 angegeben werden. Entsprechend dem zweiten Betrag 54 ist ein gesamter Schwenkbereich 56 des Reiters 22 um die Drehachse A größer als der Arbeitsbereich 48. Eine Differenz 58 zwischen dem zweiten Betrag 54 und dem ersten Betrag 50 ist in Fig. 13 zur Veranschaulichung ebenfalls angegeben. Diese Differenz 58 entspricht einem Demontagebereich der maximal möglichen Schwenkbewegung, welche durch den Schwenkbereich 56 angegeben ist.

Wird der Grundkörper 24 des Wischblatts 14 über den Arbeitsbereich 48 hinaus in den Demontagebereich verschwenkt, so lässt sich der Schieberiegel 34 in die durch den Pfeil 40 angegebene Richtung, also über das freie Ende des Wischarms 12 hinaus verschieben. Dies ist möglich, weil dann die Anschläge 46 nicht mehr mit den Endbereichen 44 des Sicherungselements 42 in Anlage sind.

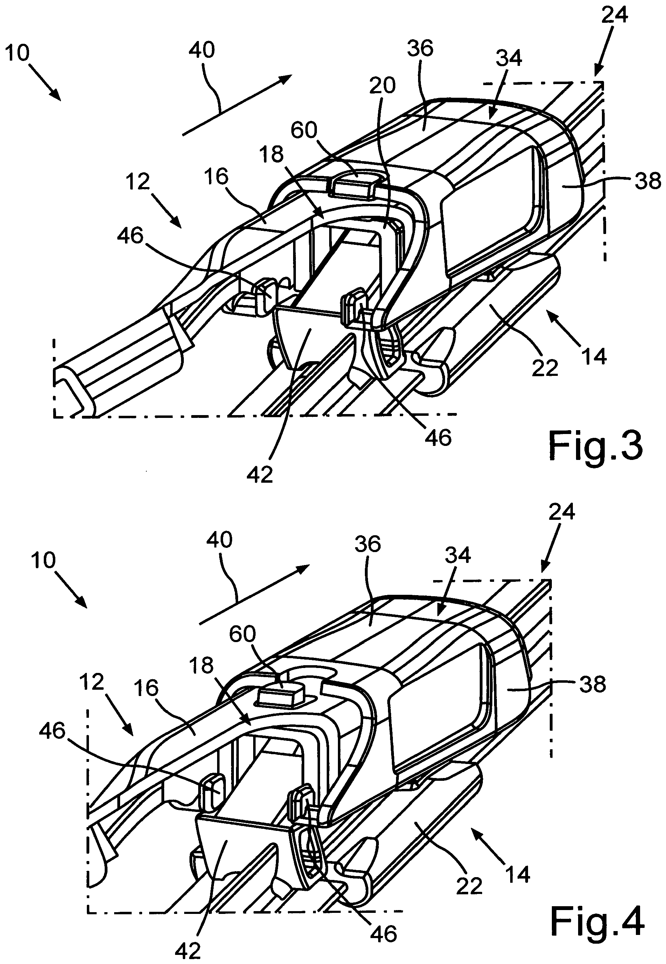

Der über den Arbeitsbereich 48 hinaus verschwenkte Grundkörper 24 des Wischblatts 14 ist in Fig. 3 in dieser Schwenkstellung gezeigt, in welcher das Sicherungselement 42 die Anschläge 46 freigibt. Wie in Fig. 4 gezeigt ist, lässt sich dann der Schieberiegel 34 in die durch den Pfeil 40 angegebene Richtung verschieben. Entsprechend ist dann der Schieberiegel 34 von einem Pin 60 beabstandet, welcher zu der Wippe 20 gehört und durch eine in dem Rücken des Wischarms 12 vorgesehene Öffnung hindurchtritt.

Sobald also der Reiter 22 über den Arbeitsbereich 48 hinaus verschwenkt wird, gibt das Sicherungselement 42 die Anschläge 46 frei, und der Schieberiegel 34 kann in die in Fig. 4 gezeigte Demontagestellung oder Montagestellung verschoben werden, in welcher der Adapter 18 nach unten aus dem Endbereich 16 des Wischarms 12 entnommen beziehungsweise von unten in den Endbereich 16 eingebracht werden kann.

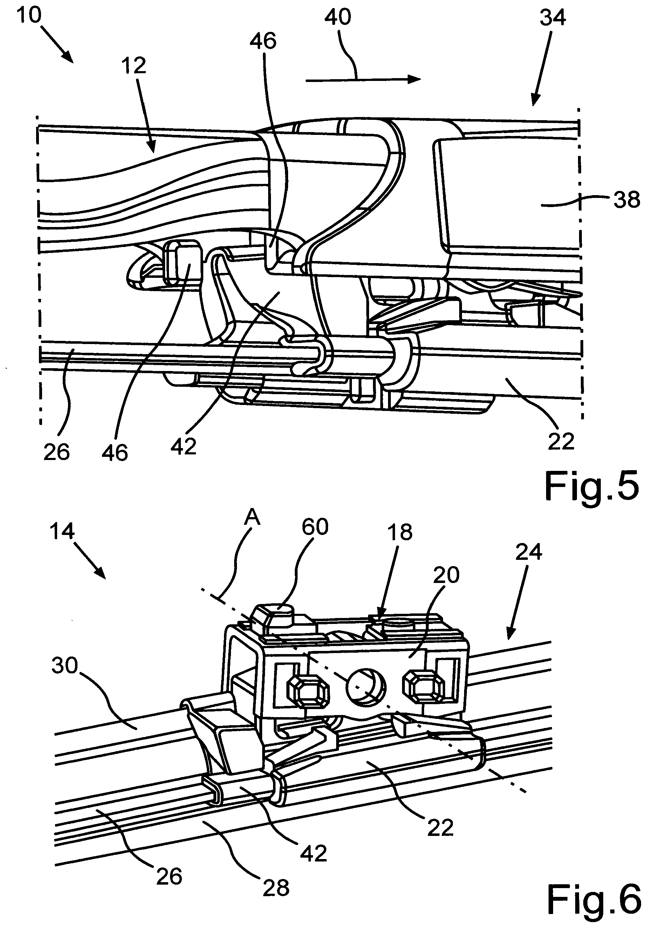

Bei der in Fig. 5 gezeigten Verbindungsanordnung 10 ist das Sicherungselement 42 als von dem Reiter 22 separates Bauteil ausgebildet. Jedoch sind auch hier die Anschläge 46 des Schieberiegels 34 in Anlage mit dem Sicherungselement 42, solange im Wischbetrieb der Reiter 22 um die Drehachse A lediglich im Arbeitsbereich 48 verschwenkt wird.

Aus der Perspektivansicht des Wischblatts 14 in Fig. 6 ist besonders gut die Verschwenkbarkeit des Grundkörpers 24 und mit diesem des Reiters 22 relativ zu der Wippe 20 des Adapters 18 um die Schwenkachse oder Drehachse A ersichtlich.

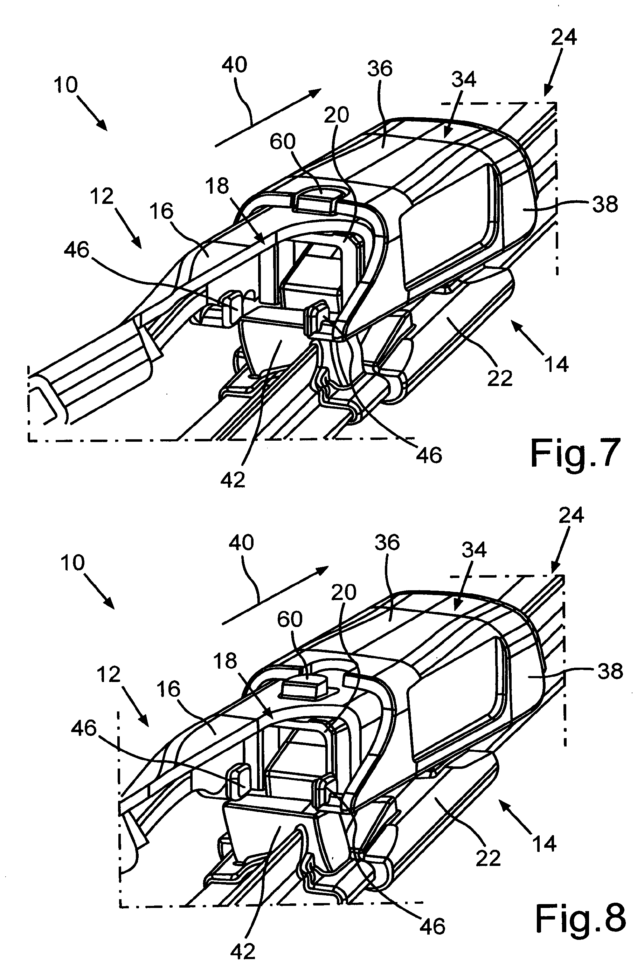

Fig. 7 zeigt den im Schwenkbereich 56 über den Arbeitsbereich 48 hinaus verschwenkten Reiter 22. Entsprechend sind bei dieser Stellung des Grundkörpers 24 des Wischblatts 14 die Anschläge 46 nicht mehr in Anlage mit dem Sicherungselement 42.

Der Schieberiegel 34 kann folglich, wie in Fig. 8 gezeigt, über das freie Ende des Wischarms 12 hinaus in die durch den Pfeil 40 angegebene Richtung verschoben werden. Auch hier ist dann der in die Demontagestellung verschobene Schieberiegel 34 von dem Pin 60 beabstandet. Beim Montieren und entsprechenden Verschieben des Schieberiegels 34 in seine in Fig. 1 gezeigte Funktionsstellung dient unter anderem der Pin 60 als Anschlag für ein Begrenzen der Bewegung des Schieberiegels 34 in eine dem Pfeil 40 entgegengesetzte Richtung.

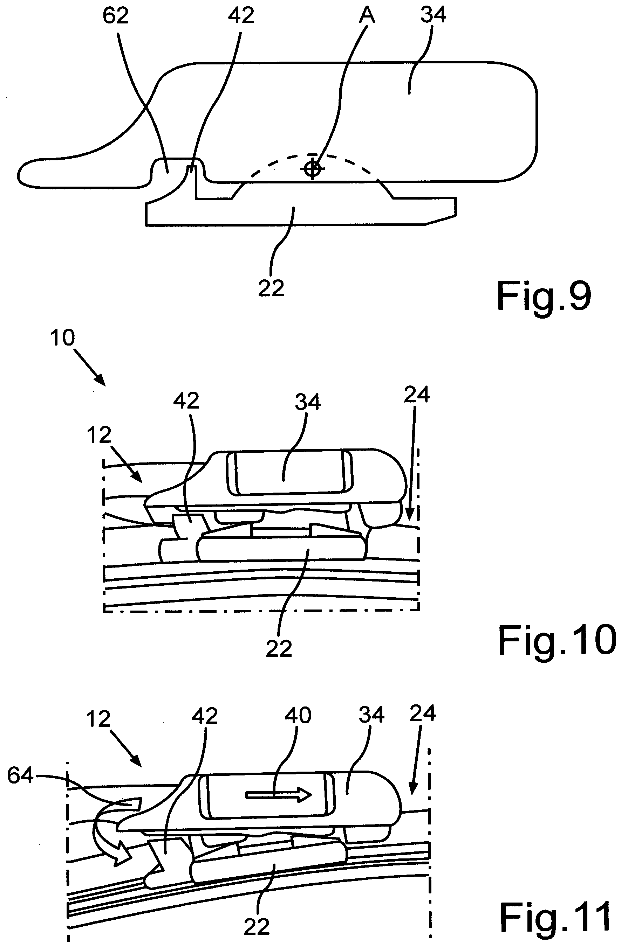

Fig. 9 zeigt schematisch ein einstückig mit dem Reiter 22 ausgebildetes Sicherungselement 42, welches als Nase ausgebildet ist, wobei diese Nase in eine Kerbe oder Ausnehmung 62 eingreift, welche im Schieberiegel 34 vorgesehen ist. Die Nase reicht jedoch auch hier lediglich dann in die Ausnehmung 62 hinein, wenn der Reiter 22 im Arbeitsbereich 48 um die Drehachse A verschwenkt wird.

Fig. 10 zeigt das als Nase ausgebildete Sicherungselement 42, welches den Schieberiegel 34 gegen eine Verschiebung in seine Demontagestellung sichert, also arretiert.

In Fig. 11 ist hingegen der Reiter 22 um die Drehachse A weiter verschwenkt dargestellt, nämlich über den Arbeitsbereich 48 hinaus. Das Wischblatt 14 befindet sich somit in einer Demontageposition, und das als Nase ausgebildete Sicherungselement 42 gibt den Schieberiegel 34 frei. Dieser kann folglich in die durch den Pfeil 40 veranschaulichte Richtung, also nach vorne, verschoben werden. Die Schwenkbewegung des Reiters 22 um die Drehachse A ist in Fig. 11 durch einen weiteren Pfeil 64 veranschaulicht.

Fig. 12 zeigt das Wischblatt 14 in seiner Demontageposition bei geöffnetem Schieberiegel 34. Entsprechend kann der Adapter 18 und mit diesem das gesamte Wischblatt 14 nach unten aus dem als Aufnahme ausgebildeten Endbereich 16 des Wischarms 12 entnommen werden. Eine entsprechende Entnahmerichtung ist in Fig. 12 durch einen weiteren Pfeil 66 veranschaulicht.

Fig. 13 zeigt eine Variante der Verbindungsanordnung 10, bei welcher das Sicherungselement 42 als an dem Schieberiegel 34 angeordneter Vorsprung ausgebildet ist, welcher mit einem am Reiter 22 vorgesehenen Anschlag in Anlage ist, so lange der Reiter 22 maximal um den ersten Betrag 50 um die Drehachse A verschwenkt, also im Arbeitsbereich 48 bewegt wird.

Das als formschlüssiges Zusatzelement dienende Sicherungselement 42 ist so angeordnet, dass es von äußeren Krafteinwirkungen nicht beeinflusst ist, welche ohne das Vorsehen des Sicherungselements 42 eine Verschiebung des Schieberiegels 34 in die durch den Pfeil 40 angegebene Richtung bewirken könnten. Dieses formschlüssige Zusatzelement kann, wie in Fig. 1 gezeigt, einstückig mit dem Reiter 22 ausgebildet sein oder, wie in Fig. 5 gezeigt, als separates Bauteil.

## Patentansprüche

1. Verbindungsanordnung zum Verbinden eines Wischblatts (14) mit einem Wischarm (12) für eine Scheibenwischanlage eines Fahrzeugs, mit einem Anbindungselement (18), welches ein zum Festlegen des Anbindungselements (18) an dem Wischarm (12) ausgebildetes Oberteil (20) umfasst, an welchem ein zum Halten eines Grundkörpers (24) des Wischblatts (14) ausgebildetes Unterteil (22) um eine Drehachse (A) schwenkbar gelagert ist, und mit einem den Wischarm (12) in einem Endbereich (16) umgreifenden Schieber (34), welcher entlang des Wischarms (12) aus einer Montagestellung in eine das Anbindungselement (18) sichernde Funktionsstellung verschiebbar ist,
**dadurch gekennzeichnet, dass**
die Verbindungsanordnung (10) wenigstens ein Sicherungselement (42) umfasst, welches bei einer Schwenkbewegung des Unterteils (22) um die Drehachse (A) um einen ersten Betrag (50) ein Verschieben des Schiebers (34) in die Montagestellung unterbindet, jedoch das Verschieben bei einer Schwenkbewegung des Unterteils (22) um die Drehachse (A) um einen zweiten Betrag (54) zulässt, welcher größer ist als der erste Betrag (50).

2. Verbindungsanordnung nach Anspruch 1,
**dadurch gekennzeichnet, dass**
das wenigstens eine Sicherungselement (42) derart ausgebildet ist, dass die Schwenkbewegung des Unterteils (22) um die Drehachse (A) um den ersten Betrag (50) im Wischbetrieb auftritt.

3. Verbindungsanordnung nach Anspruch 1 oder 2,
**dadurch gekennzeichnet, dass**
in der Funktionsstellung das Anbindungselement (18) in eine Längsrichtung des Wischblatts (14) lagegesichert zwischen dem wenigstens einen Sicherungselement (42) und einem stirnseitigen Ende des Schiebers (34) gehalten ist.

4. Verbindungsanordnung nach einem der Ansprüche 1 bis 3,
**dadurch gekennzeichnet, dass**
das wenigstens eine Sicherungselement (42) als an dem Schieber (34) angeordneter Vorsprung ausgebildet ist, welcher bei der Schwenkbewegung des Unterteils (22) um die Drehachse (A) um den ersten Betrag (50) mit einem auf Seiten des Unterteils (22) vorgesehenen Anschlag in Anlage ist.

5. Verbindungsanordnung nach einem der Ansprüche 1 bis 4,
**dadurch gekennzeichnet, dass**
das wenigstens eine Sicherungselement (42) einen auf Seiten des Unterteils (22) vorgesehenen Vorsprung umfassen, welcher bei der Schwenkbewegung des Unterteils (22) um die Drehachse (A) um den ersten Betrag (50) mit einem auf Seiten des Schiebers (34) vorgesehenen Anschlag (46) in Anlage ist.

6. Verbindungsanordnung nach Anspruch 5,
**dadurch gekennzeichnet, dass**
der Vorsprung einstückig mit einem Grundkörper des Unterteils (22) ausgebildet ist.

7. Verbindungsanordnung nach einem der Ansprüche 1 bis 6,
**dadurch gekennzeichnet, dass**
der Schieber im Querschnitt ein U-Profil mit einem Rücken (36) und zwei Schenkeln (38) aufweist, wobei an wenigstens einem der Schenkel (38) ein den Wischarm (12) in dem Endbereich (16) unterseitig umgreifender Steg angeordnet ist.

8. Wischblatt einer Verbindungsanordnung (10) nach einem der Ansprüche 1 bis 7, wobei das wenigstens eine Sicherungselement (42) am Unterteil (22) des Anbindungselements (18) angeordnet ist.

9. Wischarm einer Verbindungsanordnung (10) nach einem der Ansprüche 1 bis 7, wobei das wenigstens eine Sicherungselement (42) am Schieber (34) angeordnet ist.

## Claims

1. Connecting arrangement for connecting a wiper blade (14) to a wiper arm (12) for a windscreen wiping system of a vehicle, having a connection element (18), which comprises an upper part (20) designed to secure the connection element (18) to the wiper arm (12), on which upper part (20) a lower part (22) designed to hold a base body (24) of the wiper blade (14) is mounted so as to be pivotable about an axis of rotation (A), and having a slider (34) engaging around the wiper arm (12) in an end region (16), which can be displaced along the wiper arm (12) from an assembly position into an operating position securing the connection element (18),
**characterised in that**
the connecting arrangement (10) comprises at least one securing element (42), which, upon a pivot movement of the lower part (22) about the axis of rotation (A) by a first amount (50), suppresses a displacement of the slider (34) into the assembly position, but allows the displacement in the event of a pivot movement of the lower part (22) about the axis of rotation (A) by a second amount (54), which is greater than the first amount (50).

2. Connecting arrangement according to claim 1,
**characterised in that**
the at least one securing element (42) is designed in such a way that the pivot movement of the lower part (22) about the axis of rotation (A) by the first amount (50) arises in the wiping operation.

3. Connecting arrangement according to claim 1 or 2,
**characterised in that**
in the operating position, the connection element (18) is held in a position-secured manner in a longitudinal direction of the wiper blade (14) between the at least one securing element (42) and a front-side end of the slider (34).

4. Connecting arrangement according to one of claims 1 to 3,
**characterised in that**
the at least one securing element (42) is designed as a projection disposed on the slider (34), which, in the event of the pivot movement of the lower part (22) about the axis of rotation (A) by the first amount (50), is in abutment with a stop provided on sides of the lower part (22).

5. Connecting arrangement according to one of claims 1 to 4,
**characterised in that**
the at least one securing element (42) comprises a projection provided on sides of the lower part (22), which, in the event of the pivot movement of the lower part (22) about the axis of rotation (A) by the first amount (50), is in abutment with a stop (46) provided on sides of the slider (34).

6. Connecting arrangement according to claim 5,
**characterised in that**
the projection is formed integrally with a base body of the lower part (22).

7. Connecting arrangement according to one of claims 1 to 6,
**characterised in that**
the slider has a U-shaped cross-section with a back (36) and two legs (38), wherein a web element engaging around the wiper arm (12) in the end region (16) at the bottom side is disposed on at least one of the legs (38).

8. Wiper blade of a connecting arrangement (10) according to one of claims 1 to 7, wherein the at least one securing element (42) is disposed on the lower part (22) of the connection element (18).

9. Wiper arm of a connecting arrangement (10) according to one of claims 1 to 7, wherein the at least one securing element (42) is disposed on the slider (34).

## Revendications

1. Système de liaison destiné à relier un balai (14) d'essuie-glace à un porte-balai (12) d'essuie-glace pour une installation d'essuie-glace d'un véhicule automobile, comprenant un élément de raccordement (18) qui comprend une partie supérieure (20) conçue pour fixer l'élément de raccordement (18) au porte-balai (12) d'essuie-glace, sur laquelle est montée pivotant autour d'un axe de rotation (A) une partie inférieure (22) conçue pour maintenir un corps de base (24) du balai (14) d'essuie-glace, et comprenant un coulisseau (34) entourant le porte-balai (12) d'essuie-glace dans une zone finale (16), lequel peut coulisser le long du porte-balai (12) d'essuie-glace à partir d'une position de montage dans une position de fonctionnement fixant l'élément de raccordement (18), **caractérisé en ce que** le système de liaison (10) comprend au moins un élément (42) de fixation, qui, lorsque la partie inférieure (22) effectue un mouvement de pivotement autour de l'axe de rotation (A) d'une première ampleur (50), empêche le coulisseau (34) de coulisser dans une position de montage, mais autorise le coulissement lorsque la partie inférieure (22) effectue un mouvement de pivotement autour de l'axe de rotation (A) d'une seconde ampleur (54), qui est supérieure à la première ampleur (50).

2. Système de liaison selon la revendication 1, **caractérisé en ce que** l'au moins un élément de fixation (42) est conçu de telle sorte que le mouvement de pivotement de la partie inférieure (22) autour de l'axe de rotation (A) d'une première ampleur (50) se produit pendant le balayage.

3. Système de liaison selon la revendication 1 ou 2, **caractérisé en ce que** dans la position de fonctionnement l'élément de raccordement (18) est maintenu dans un sens longitudinal du balai (14) d'essuie-glace en position bloquée entre l'au moins un élément de fixation (42) et une extrémité avant du coulisseau (34).

4. Système de liaison selon l'une quelconque des revendications 1 à 3, **caractérisé en ce que** l'au moins un élément de fixation (42) est conçue comme une partie saillante disposée sur le coulisseau (34) qui, lorsque la partie inférieure (22) effectue un mouvement de pivotement autour de l'axe de rotation (A) d'une première ampleur (50), est en appui avec une butée (48) prévue sur les côtés du coulisseau (34).

5. Système de liaison selon l'une quelconque des revendications 1 à 4, **caractérisé en ce que** l'au moins un élément de fixation (42) comprend une partie en saillie disposée sur les côtés de la partie inférieure (22) qui, lorsque la partie inférieure (22) effectue un mouvement de pivotement autour de l'axe de rotation (A) d'une première ampleur (50), est en appui avec la butée (46) disposée sur les côtés du coulisseau (34).

6. Système de liaison selon la revendication 5, **caractérisé en ce que** la partie en saillie est conçue d'un seul tenant avec un corps de base de la partie inférieure (22).

7. Système de liaison selon l'une quelconque des revendications 1 à 6, **caractérisé en ce que** le coulisseau présente dans la section transversale un profilé en U ayant un dos (36) et deux branches (38), sur au moins une des branches (38) est disposé un élément jointif entourant par le dessous le porte-balai (12) d'essuie-glace dans la zone finale (16).

8. Balai d'essuie-glace d'un système de liaison (10) selon l'une quelconque des revendications 1 à 7, l'au moins un élément de fixation (42) étant disposé sur la partie inférieure (22) de l'élément de raccordement (18).

9. Balai d'essuie-glace d'un système de liaison (10) selon l'une quelconque des revendications 1 à 7, l'au moins un élément de fixation (42) étant disposé sur le coulisseau (34).
